# EUROPÄISCHE PATENTSCHRIFT

(11) **EP 3 009 700 B1**
(45) Veröffentlichungstag und Bekanntmachung des Hinweises auf die Patenterteilung: **28.12.2016**
(21) Anmeldenummer: 15181232.8
(22) Anmeldetag: 17.08.2015
(51) Int. Cl.: F16C 35/02, F16C 17/02, F16C 27/02

(54) **LAGERANORDNUNG FÜR EIN RÜHRWERK**
BEARING ARRANGEMENT FOR AN AGITATOR
INSTALLATION DE STOCKAGE POUR UN AGITATEUR

(30) Priorität: 16.10.2014 DE 102014220980
(43) Veröffentlichungstag der Anmeldung: 20.04.2016
(73) Patentinhaber: EagleBurgmann Germany GmbH & Co. KG, 82515 Wolfratshausen (DE)
(72) Erfinder: SCHERER, Hans-Georg, 82538 Geretsried (DE); ERTL, Martin, 82541 Holzhausen (DE)
(74) Vertreter: Hoefer & Partner Patentanwälte mbB

(56) Entgegenhaltungen:
- DE-B3-102011 122 554
- GB-A- 2 335 243
- GB-A- 2 356 227
- US-A- 2 897 026
- US-A- 4 513 215
- US-A- 4 521 708
- US-A- 5 189 328
- US-A1- 2010 166 578
- US-A1- 2014 127 052

## Beschreibung

Die vorliegende Erfindung betrifft ein Rührwerk mit einer Lageranordnung.

Bei Lageranordnungen für Rührwerke werden bisher Lagerbuchsen auf einen Lagerträger eingeschrumpft. In einem nächsten Schritt werden anschließend an den Lagerträger Rührflügel angeschweißt. Durch den Schweißvorgang kann es hierbei zu Schweißspannungen in den Bauteilen kommen, woraus Risse und gegebenenfalls auch eine komplette Zerstörung der Lagerbuchse resultieren kann. Auch kann sich die Buchse während des Schweißvorgangs gegenüber dem Lagerträger bewegen. Ferner werden derartige Rührwerke insbesondere auch in sterilen Anwendungen verwendet, wobei die Lageranordnung mitsamt den Rührflügeln häufig auch am Boden des Rührwerks angeordnet ist und in vertikaler Richtung ausgerichtet ist. Weiterhin ist ein Austausch der geschrumpften Lagerbuchse praktisch nicht möglich. Ferner ist aus der US 2,897,026 eine Lageranordnung gemäß dem Oberbegriff des Anspruchs 1 bekannt. Darüber hinaus zeigt die US 2010/0166578 A1 eine Lageranordnung, bei der zwei Dichtelemente zwischen einer Lagerbuchse und einem Stator angeordnet sind, um eine sichere Ausrichtung einer Welle zu ermöglichen.

Es ist daher Aufgabe der vorliegenden Erfindung, ein Rührwerk mit einer Lageranordnung bereitzustellen, welches einfach und kostengünstiger herstellbar ist, ohne dass dadurch die im Stand der Technik beim Aufschrumpfen erwähnten Nachteile auftreten.

Diese Aufgabe wird durch ein Rührwerk mit den Merkmalen des Anspruchs 1 gelöst. Die Unteransprüche zeigen jeweils bevorzugte Weiterbildungen der Erfindung.

Das erfindungsgemäße Rührwerk umfasst eine Lageranordnung mit einem Gleitlager mit einem ersten Lagerelement und einem zweiten Lagerelement. Das erste Lagerelement weist einen Lagerring mit einer Gleitfläche, welche gegen das zweite Lagerelement gleitet, und einen Lagerringträger auf. Der Lagerringträger ist konzentrisch zum Lagerring angeordnet. Zwischen dem Lagerring und dem Lagerringträger ist erfindungsgemäß nun ein elastisches Element angeordnet, wobei das elastische Element eine Klemmverbindung zwischen dem Lagerring und dem Lagerringträger bereitstellt. Dadurch hält das elastische Element den Lagerring am Lagerringträger. Somit wird erfindungsgemäß statt einer Schrumpfverbindung ein elastisches Element zwischen Lagerring und Lagerringträger verwendet, um eine Klemmverbindung bereitzustellen. Hierdurch können an den Lagerringträger Rührflügel oder dgl. angeschweißt werden, ohne dass dies zu Beschädigungen des Lagerrings führt. Hierdurch kann ferner auch eine hinsichtlich steriler Anwendungen verbesserte Konstruktion bereitgestellt werden. Weiter umfasst die Lageranordnung ferner eine erste und zweite Runddichtung, welche zwischen dem Lagerring und dem Lagerringträger angeordnet sind. In Axialrichtung der Lageranordnung ist dabei das elastische Element zwischen der ersten und zweiten Runddichtung angeordnet. Die erste Runddichtung ist dabei an einem ersten Ende des ersten Lagerelements angeordnet und die zweite Runddichtung ist an einem entgegengesetzten zweiten Ende des ersten Lagerelements angeordnet. Die erste und zweite Runddichtung ist weiter bevorzugt jeweils ein O-Ring.

Weiter ist zwischen dem Lagerring und dem Lagerringträger ein Spalt vorgesehen, in welchem ein Teil der Runddichtung im montierten Zustand eingequetscht ist.

Das elastische Element ist bevorzugt ein gewelltes Blechband oder ein Federstahlband oder ein Elastomerband. Das gewellte Blechband weist dabei entlang des Umfangs mäandrierende Bereiche auf, so dass das gewellte Blechband abwechselnd den Lagerring und den Lagerringträger kontaktiert. Das gewellte Blechband stellt dabei eine besonders stabile Klemmverbindung zwischen Lagerring und Lagerringträger bereit.

Das elastische Element zwischen Lagerring und Lagerringträger ist vorzugsweise in Axialrichtung der Lageranordnung mittig am Lagerringträger angeordnet. Weiter bevorzugt weist das elastische Element in Axialrichtung der Lageranordnung eine Länge auf, welche maximal ein Drittel einer Länge des Lagerrings und/oder des Lagerringträgers ist.

Die Lageranordnung ist besonders bevorzugt derart aufgebaut, dass das erste Lagerelement, welches den Lagerring und den Lagerringträger umfasst, rotiert und das zweite Lagerelement stationär ist.

Weiter bevorzugt weist der Lagerringträger eine Ausnehmung zur Aufnahme des elastischen Elements auf. Hierdurch wird insbesondere eine Montage zwischen Lagerring und Lagerringträger und dem elastischen Element vereinfacht.

Um auch bei Temperaturänderungen, welche beim Betrieb der Lageranordnung auftreten können, einen definierten axialen Sitz zu haben, ist zwischen dem Lagerring und dem Lagerringträger vorzugsweise eine axiale Anlagefläche ausgebildet. Hierdurch kann ein Wandern des Lagerrings relativ zum Lagerringträger in Axialrichtung sicher verhindert werden.

Die axiale Anlagefläche ist besonders bevorzugt ein Rücksprung am Lagerring. Bei einer vertikalen Verwendung der Lageranordnung ist der Rücksprung besonders bevorzugt oberhalb des elastischen Elements vorgesehen. Dadurch wird verhindert, dass der Lagerring im Betrieb nach oben wandern kann.

Weiter bevorzugt umschließt der Lagerringträger den Lagerring in axialer Richtung der Lageranordnung vollständig. Somit kann eine vollständige Überdeckung des Lagerrings durch den Lagerringträger sichergestellt werden.

Bevorzugt umfasst die Lageranordnung wenigstens einen Rührflügel. Weiter bevorzugt ist am Lagerringträger wenigstens ein Rührflügel angeschweißt. Die Schweißverbindung zwischen Rührflügel und Lagerringträger kann durch die erfindungsgemäße Maßnahme des Vorsehens des elastischen Elements zwischen Lagerringträger und Lagerring keine Beschädigung des Lagerrings mehr hervorrufen. Insbesondere ist es möglich, dass ein Kunde, welcher die Lageranordnung kauft, selbst den Schweißvorgang des Rührflügels an den Lagerringträger vornimmt. Hierbei besteht keine Gefahr einer Beschädigung des Lagerrings oder der Klemmverbindung, da die beim Schweißvorgang entstehende Wärme die Klemmverbindung nicht löst.

Am Lagerringträger ist bevorzugt wenigstens ein Rührflügel angeordnet.

Das Rührwerk umfasst ferner bevorzugt eine Magnetkupplung mit einem Außenrotor, einem Innenrohr und einem zwischen dem Außenrotor und dem Innenrotor angeordneten Spaltkopf. Bevorzugt ist dabei der Außenrotor über den Rührflügel mit dem Lagerringträger verbunden. Alternativ ist der Außenrotor mit dem Lagerringträger mittels Verbindungsstegen oder einem Verbindungsring verbunden. Durch die Verwendung eines oder mehrerer Verbindungstege oder eines Verbindungsringes zwischen dem Außenrotor und dem Lagerringträger ist es möglich, dass ein Rührflügel nicht mit dem Lagerringträger verschweißt werden muss, sondern beispielsweise lediglich am Außenrotor fixiert ist. Somit ist ein Zwischenraum zwischen dem Rührflügel und dem Lagerringträger ausgebildet. Die Verbindungsstege bzw. der Verbindungsring stellt dabei eine möglichst kurze Verbindung zwischen den Rührflügeln und dem Außenrotor der Magnetkupplung bereit. Es sei angemerkt, dass der Außenrotor, das Verbindungselement und der Lagerringträger auch als einstückiges Bauteil vorgesehen werden können. Der Spalttopf ist mit dem zweiten Lagerelement des Gleitlagers verbunden und rotiert nicht.

Nachfolgend werden unter Bezugnahme auf die begleitende Zeichnung ein Rührwerk mit einer Lageranordnung gemäß einem bevorzugten Ausführungsbeispiel der Erfindung im Detail beschrieben. In der Zeichnung ist:
Fig. 1 eine schematische Schnittansicht eines Rührwerks mit einer ersten erfindungsgemäßen Lageranordnung,
Fig. 2 eine schematische Schnittansicht der Lageranordnung von Fig. 1 im Detail, und
Fig. 3 eine schematische Schnittansicht eines Rührwerks mit einer zweiten erfindungsgemäßen Lageranordnung.

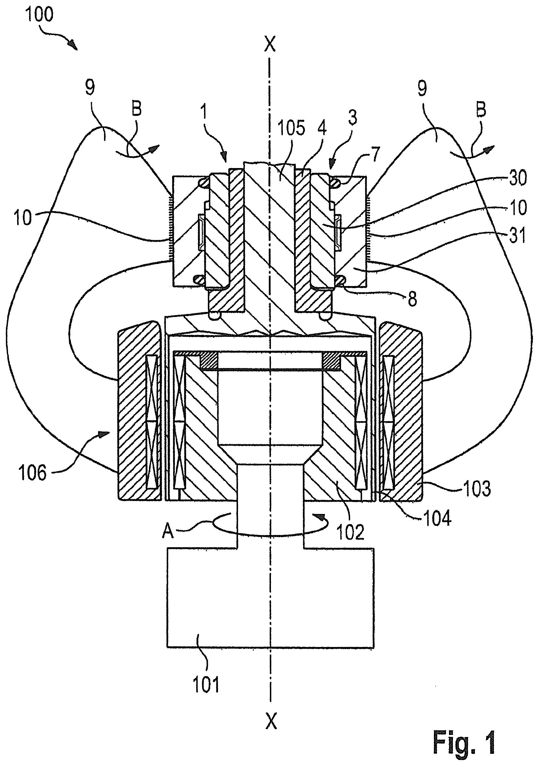

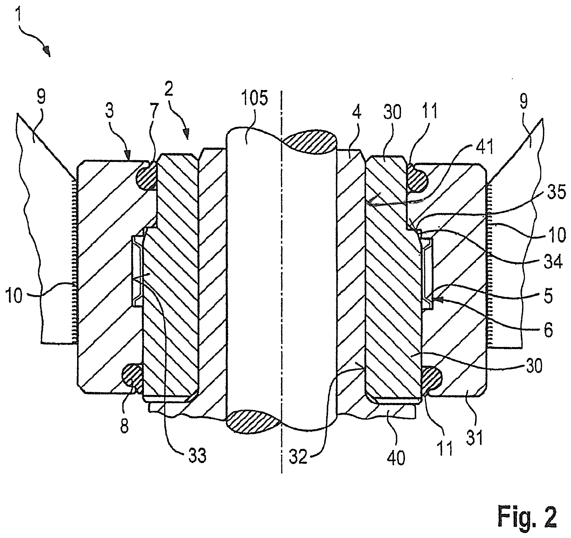

Nachfolgend wird eine Lageranordnung 1 gemäß einem ersten bevorzugten Ausführungsbeispiel der Erfindung im Detail unter Bezugnahme auf die Figuren 1 und 2 beschrieben.

Die erfindungsgemäße Lageranordnung 1 wird, wie in Fig. 1 gezeigt, in einem Rührwerk 100 verwendet. Das Rührwerk wird beispielsweise bei pharmazeutischen Anwendungen verwendet und ist üblicherweise am Boden eines Behältnisses (nicht dargestellt) angeordnet. Das Rührwerk 100 umfasst einen Antrieb 101, welcher üblicherweise unterhalb des Bodens des Behältnisses angeordnet ist. Der Antrieb 101 ist über eine Magnetkupplung 106 mit der Lageranordnung 1 verbunden. Die Magnetkupplung 106 umfasst einen Innenrotor 102, welcher mit dem Antrieb 101 direkt verbunden ist, einen Außenrotor 103 sowie einen zwischen Innenrotor 102 und Außenrotor 103 angeordneten ortsfesten Spalttopf 104.

Der Spalttopf 104 ist dabei einstückig mit einem Wellenzapfen 105 ausgebildet, welcher in Axialrichtung X-X der Lageranordnung ausgerichtet ist. Die Lageranordnung 1 selbst ist dann an dem Wellenzapfen 105 angeordnet (vgl. Fig. 1).

Das Rührwerk 100 umfasst ferner Rührflügel 9, welche die Rührfunktion bereitstellen. Die Rührflügel 9 sind dabei einerseits mit der Lageranordnung 1 und andererseits mit dem Außenrotor 103 verbunden.

Wenn der Antrieb 101 angetrieben wird (Fig. 1, Pfeil A) dreht sich der Innenrotor 102 und über die magnetischen Kräfte auch der Außenrotor 103. Dadurch werden auch die Rührflügel 9 angetrieben (Fig. 1, Pfeil B).

Damit die Rotation der Rührflügel 9 problemlos erfolgen kann, ist die erfindungsgemäße Lageranordnung 1 vorgesehen.

Die Lageranordnung 1 umfasst ein Gleitlager 2 mit einem ersten Lagerelement 3 und einem zweiten Lagerelement 4.

Das erste Lagerelement 3 umfasst einen Lagerring 30 und einen Lagerringträger 31. Wie aus Fig. 1 ersichtlich ist, sind die Rührflügel 9 dabei am Lagerringträger 31 mittels einer Schweißnaht 10 fixiert.

Das zweite Lagerelement 4 ist eine Lagerbuchse, welche am Wellenzapfen 105 befestigt ist. Diese Befestigung kann beispielsweise mittels einer Presspassung ausgebildet sein. Das zweite Lagerelement 4 umfasst einen radial nach außen gerichteten, umlaufenden Flansch 40, welcher als axialer Anschlag für das erste Lagerelement 3 in Richtung zur Magnetkupplung 106 dient.

Das erste Lagerelement 3 umfasst neben dem Lagerring 30 und dem Lagerringträger 31 ferner noch ein elastisches Element 5, welches in diesem Ausführungsbeispiel ein gewelltes Blechband ist. Das gewellte Blechband stellt dabei eine Klemmverbindung 6 zwischen dem Lagerring 30 und dem Lagerringträger 31 bereit.

Wie aus Fig. 2 ersichtlich ist, weist der Lagerringträger 31 eine Ausnehmung 33 an einer inneren Umfangsfläche auf, in welcher das gewellte Blechband angeordnet ist. Die Ausnehmung 33 weist dabei in Axialrichtung X-X eine Länge auf, welche maximal ein Drittel einer Länge des Lagerrings 30 aufweist und in Axialrichtung mittig am Lagerringträger 31 vorgesehen ist.

An den beiden in Axialrichtung X-X liegenden Enden des ersten Lagerelements 3 sind ferner eine erste und zweite Runddichtung 7, 8 angeordnet. Die Runddichtungen 7, 8 sind O-Ringe. Wie aus Fig. 2 ersichtlich ist, ist dabei an den freien axialen Enden des ersten Lagerelements 3 jeweils ein Spalt 11 zwischen dem Lagerring 30 und dem Lagerringträger 31 ausgebildet. Dadurch werden die Runddichtungen 7, 8 im montierten Zustand elastisch verformt, so dass Teilbereiche der Runddichtungen den Spalt 11 ausfüllen (vgl. Fig. 2).

Weiterhin ist am Lagerring 30 ein Rücksprung 35 vorgesehen, welcher eine axiale Anlagefläche für den Lagerringträger 31 bildet. Am Rücksprung 35 ist ferner eine Fase 34 ausgebildet, welche eine einfachere Montage des Lagerringträgers 31 auf den Lagerring 30 ermöglicht.

Die erfindungsgemäße Lageranordnung 1 ermöglicht nun eine praktisch spannungsfreie Verbindung zwischen dem Lagerring 30 und dem Lagerringträger 31. Die Verbindung wird durch das elastische Element 5 mittels der Klemmverbindung 6 hergestellt. Die Runddichtungen 7, 8 an den beiden Enden des ersten Lagerelements 3 dichten dabei den Spalt zwischen dem Lagerring 30 und dem Lagerringträger 31 ab.

Eine Gleitfläche 32 des Lagerrings 30 gleitet dabei mit einer Gleitfläche 41 des zweiten Lagerelements 4. Die Klemmverbindung zwischen dem Lagerring 30 und dem Lagerringträger 31 ist dabei drehrichtungsunabhängig. D.h., unabhängig von einer Drehrichtung des Antriebs 101 kann immer eine sichere Verbindung gewährleistet werden, was beispielsweise nicht gegeben ist, wenn zwischen dem Lagerring 30 und dem Lagerringträger 31 eine gewindebasierte Verbindung ausgebildet wäre.

Durch die Abdichtung mittels der beiden Runddichtungen 7, 8 kann auch eine hygienegerechte Sterilanwendung realisiert werden. Ferner kann erfindungsgemäß als Material der Lagerbuchsen Keramik verwendet werden. Beispielsweise können das zweite Lagerelement 4 und der Lagerring 30 aus Keramik hergestellt sein und der Lagerringträger 31 aus einem metallischen Werkstoff.

Der Rücksprung 35 verhindert ferner ein axiales Verschieben des Lagerringträgers 31 relativ zum Lagerring 30, da der Lagerringträger 31 über die Rührflügel 9 mit dem Außenrotor 102 fest verbunden ist.

Da die Erfindung auf ein Einschrumpfen zwischen dem Lagerring 30 und dem Lagerringträger 31 verzichten kann, kann auch beim Kunden, welcher eine erfindungsgemäße Lageranordnung 1 erwirbt, ein sicheres Anschweißen der Rührflügel 9 erfolgen, ohne dass dabei die Lageranordnung 1 beschädigt werden würde. Die bei aufgeschrumpften Buchsen vorhandene Gefahr, dass sich die Schrumpfverbindung durch den Anschweißvorgang der Rührflügel 9 löst, kann erfindungsgemäß nicht auftreten, da die Verbindung zwischen Lagerring 30 und Lagerringträger 31 mittels Klemmen über das elastische Element 5 erfolgt. Im Betrieb rotiert somit das erste Lagerelement 3, und das zweite Lagerelement 4 ist ortsfest am Wellenzapfen 105 angeordnet.

Wenn das elastische Element 5 als gewelltes Blechband vorgesehen ist, ist das gewellte Blechband vorzugsweise in Axialrichtung geschlitzt, so dass eine einfache Montage möglich ist. Statt des gewellten Blechbands kann beispielsweise auch ein Federstahlband, vorzugsweise ebenfalls in Axialrichtung geschlitzt, oder ein Elastomerband verwendet werden.

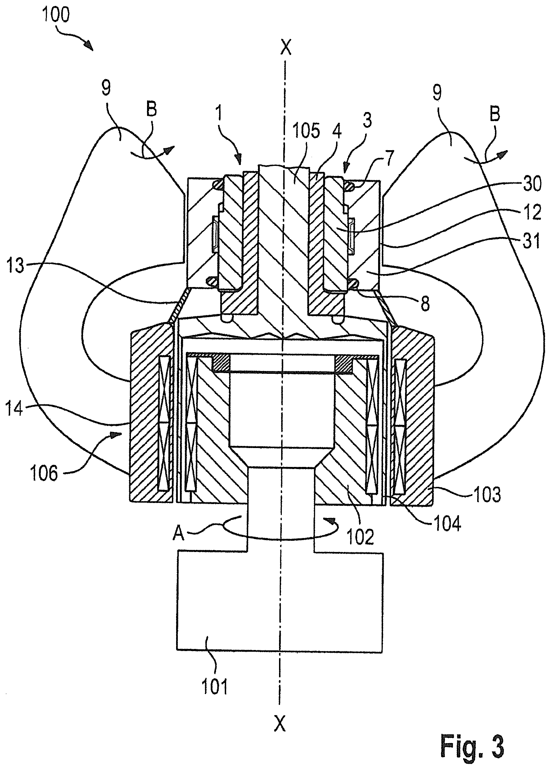

Figur 3 zeigt ein Rührwerk mit erfindungsgemäßer Lageranordnung gemäß einem zweiten Ausführungsbeispiel der Erfindung. Im Unterschied zum ersten Ausführungsbeispiel ist beim zweiten Ausführungsbeispiel ein Verbindungselement 13 zwischen dem Lagerringträger 31 und dem Außenrotor 103 vorgesehen. Das Verbindungselement 13 kann beispielsweise eine Vielzahl von linearen Stegen umfassen oder alternativ als konischer Verbindungsring ausgebildet sein. Weiter alternativ könnte das Verbindungselement 13, der Lagerringträger 31 und der Außenrotor 103 auch ein einstückiges Bauteil sein. Die Rührflügel 9 sind mittels Schweißverbindungen 14 mit dem Außenrotor 103 verbunden. Am Lagerringträger 31 ist ein Zwischenraum 12 zu den Rührflügeln 9 vorgesehen. Somit sind die Rührflügel 9 nicht mehr direkt mit dem Lagerringträger 31 verbunden sondern über den Außenrotor 103 und das Verbindungselement 13. Ansonsten entspricht dieses Ausführungsbeispiel dem vorhergehenden Ausführungsbeispiel, sodass auf die vorherstehende Beschreibung verwiesen werden kann.

### Bezugszeichenliste

- 1: Lageranordnung
- 2: Gleitlager
- 3: erstes Lagerelement
- 4: zweites Lagerelement
- 5: elastisches Element
- 6: Klemmverbindung
- 7: erste Runddichtung
- 8: zweite Runddichtung
- 9: Rührflügel
- 10: Schweißnaht
- 11: Spalt
- 12: Zwischenraum
- 13: Verbindungselement
- 14: Schweißverbindung
- 30: Lagerring
- 31: Lagerringträger
- 32: Gleitfläche
- 33: Ausnehmung
- 34: Fase
- 35: Rücksprung
- 40: Flansch
- 41: Gleitfläche
- 100: Rührwerk
- 101: Antrieb
- 102: Innenrotor
- 103: Außenrotor
- 104: Spalttopf
- 105: Wellenzapfen
- 106: Magnetkupplung
- A: Rotationsrichtung Antrieb
- B: Rotationsrichtung Rührflügel
- X-X: Axialrichtung

## Patentansprüche

1. Rührwerk mit einer Lageranordnung, welche umfasst:
- ein Gleitlager (2) mit einem ersten Lagerelement (3) und einem zweiten Lagerelement (4),
- wobei das erste Lagerelement (3) einen Lagerring (30) mit einer Gleitfläche (32) und einen Lagerringträger (31) umfasst,
- wobei der Lagerringträger (31) konzentrisch zum Lagerring (30) angeordnet ist,
- wobei zwischen dem Lagerring (30) und dem Lagerringträger (31) ein elastisches Element (5) angeordnet ist, und
- wobei das elastische Element (5) eine Klemmverbindung (6) zwischen dem Lagerring (30) und dem Lagerringträger (31) bereitstellt, um den Lagerring (30) am Lagerringträger (31) zu halten,
- eine erste Runddichtung (7) und eine zweite Runddichtung (8), wobei die erste Runddichtung (7) an einem ersten in Axialrichtung gerichteten Ende zwischen dem Lagerring (30) und dem Lagerringträger (31) angeordnet ist und die zweite Runddichtung (8) an einem zweiten in Axialrichtung (X-X) gerichteten Ende zwischen dem Lagerring (30) und dem Lagerringträger (31) angeordnet ist, wobei zwischen dem Lagerring (30) und dem Lagerringträger (31) ein Spalt (11) vorgesehen ist, so dass Teilbereiche der Runddichtungen (7, 8) den Spalt (11) ausfüllen, **gekennzeichnet dadurch, dass**
- das elastische Element (5) in Axialrichtung (X-X) zwischen der ersten Runddichtung (7) und der zweiten Runddichtung (8) angeordnet ist.

2. Rührwerk nach Anspruch 1, **dadurch gekennzeichnet, dass** das elastische Element (5) ein gewelltes Blechband oder ein Federstahlband oder ein Elastomerband ist.

3. Rührwerk nach einem der vorhergehenden Ansprüche **dadurch gekennzeichnet, dass** das elastische Element (5) in Axialrichtung (X-X) der Lageranordnung mittig am Lagerringträger (31) angeordnet ist, oder
dass das erste Lagerelement (3) rotiert und das zweite Lagerelement (4) stationär ist.

4. Rührwerk nach einem der vorhergehenden Ansprüche, **dadurch gekennzeichnet, dass** der Lagerringträger (31) eine Ausnehmung (33) zur Aufnahme des elastischen Elements (5) aufweist.

5. Rührwerk nach einem der vorhergehenden Ansprüche, **gekennzeichnet durch** eine axiale Anlagefläche (35) zwischen dem Lagerring (30) und dem Lagerringträger (31).

6. Rührwerk nach einem der vorhergehenden Ansprüche, **dadurch gekennzeichnet, dass** der Lagerringträger (31) den Lagerring (30) am Außenumfang des Lagerrings (30) umschließt.

7. Rührwerk nach einem der vorhergehenden Ansprüche, ferner umfassend wenigstens einen Rührflügel (9).

8. Rührwerk nach Anspruch 7, **dadurch gekennzeichnet, dass** der Rührflügel am Lagerringträger (31) mittels einer Schweißverbindung (10) fixiert ist.

9. Rührwerk nach einem der vorhergehenden Ansprüche, ferner umfassend eine Magnetkupplung (106) mit einem Innenrotor (102), einem Außenrotor (103) und einem zwischen dem Innenrotor (102) und dem Außenrotor (103) angeordneten Spalttopf (104), wobei der Außenrotor (103) mit dem Lagerringträger (31) der Lageranordnung (1) verbunden ist.

10. Rührwerk nach Anspruch 9, **dadurch gekennzeichnet, dass** am Spalttopf (104) ein Wellenzapfen (105) angeordnet ist, an welchem das zweite Lagerelement (4) der Lageranordnung (1) angeordnet ist.

11. Rührwerk nach einem der vorhergehenden Ansprüche, **dadurch gekennzeichnet, dass** zwischen dem Wellenzapfen (105) und dem zweiten Lagerelement (4) eine Presspassung oder eine Klemmverbindungvorgesehen ist.

12. Rührwerk nach einem der vorhergehenden Ansprüche, **dadurch gekennzeichnet, dass** der Lagerringträger (31) mit dem Außenrotor (103) mittels eines Verbindungssteges oder eines Verbindungsrings oder eines Rührflügels (9) verbunden ist.

## Claims

1. Agitator having a bearing arrangement that comprises:
- a sliding bearing (2) having a first bearing element (3) and a second bearing element (4),
- wherein the first bearing element (3) comprises a bearing ring (30) having a sliding surface (32) and a bearing ring carrier (31),
- wherein the bearing ring carrier (31) is arranged concentrically with respect to the bearing ring (30),
- wherein a resilient element (5) is arranged between the bearing ring (30) and the bearing ring carrier (31), and
- wherein the resilient element (5) provides a clamping connection (6) between the bearing ring (30) and the bearing ring carrier (31) in order to hold the bearing ring (30) on the bearing ring carrier (31),
- a first round seal (7) and a second round seal (8), wherein the first round seal (7) is arranged on a first end that is aligned in the axial direction between the bearing ring (30) and the bearing ring carrier (31) and the second round seal (8) is arranged on a second end that is aligned in the axial direction (X-X) between the bearing ring (30) and the bearing ring carrier (31), wherein a gap (11) is provided between the bearing ring (30) and the bearing ring carrier (31) so that part regions of the round seals (7, 8) fill the gaps, **characterized in that**
- the resilient element (5) is arranged in the axial direction (X-X) between the first round seal (7) and the second round seal (8).

2. Agitator according to Claim 1, **characterized in that** the resilient element (5) is a corrugated sheet metal band or resilient steel band or an elastomer band.

3. Agitator according to any one of the preceding claims, **characterized in that** the resilient element (5) is arranged in the axial direction (X-X) of the bearing arrangement centrally on the bearing ring carrier (31), or
that the first bearing element (3) rotates and the second bearing element (4) is stationary.

4. Agitator according to any one of the preceding claims, **characterized in that** the bearing ring carrier (31) comprises a recess (33) for receiving the resilient element (5).

5. Agitator according to any one of the preceding claims, **characterized by** means of an axial contact surface (35) between the bearing ring (30) and the bearing ring carrier (31).

6. Agitator according to any one of the preceding claims, **characterized in that** the bearing ring carrier (31) surrounds the bearing ring (30) on the outer circumference of the bearing ring (30).

7. Agitator according to any one of the preceding claims, moreover comprising at least one mixing blade (9).

8. Agitator according to Claim 7, **characterized in that** the mixing blade is fixed to the bearing ring carrier (31) by means of a welded connection (10).

9. Agitator according to any one of the preceding claims, moreover comprising a magnetic coupling (106) having an inner rotor (102), an outer rotor (103) and a containment pot (104) that is arranged between the inner rotor (102) and the outer rotor (103), wherein the outer rotor (103) is connected to the bearing ring carrier (31) of the bearing arrangement (1).

10. Agitator according to Claim 9, **characterized in that** a shaft journal (105) is arranged on the containment pot (104) and the second bearing element (4) of the bearing arrangement (1) is arranged on said shaft journal.

11. Agitator according to any one of the preceding claims, **characterized in that** a press fit arrangement or a clamp connecting arrangement is provided between the shaft journal (105) and the second bearing element (4).

12. Agitator according to any one of the preceding claims, **characterized in that** the bearing ring carrier (31) is connected to the outer rotor (103) by means of a connecting piece or a connecting ring or a mixing blade (9).

## Revendications

1. Agitateur doté d'un ensemble palier qui comprend :
- un palier lisse (2) avec un premier élément de palier (3) et un deuxième élément de palier (4),
- sachant que le premier élément de palier (3) comprend une bague de palier (30) dotée d'une surface de glissement (32), et un support (31) de bague de palier,
- sachant que le support (31) de bague de palier est disposé concentriquement à la bague de palier (30),
- sachant qu'un élément élastique (5) est disposé entre la bague de palier (30) et le support (31) de bague de palier,
- sachant que l'élément élastique (5) fournit une liaison par serrage entre la bague de palier (30) et le support (31) de bague de palier, afin de maintenir la bague de palier (30) sur le support (31) de bague de palier,
- un premier joint torique (7) et un deuxième joint torique (8), sachant que le premier joint torique (7) est disposé entre la bague de palier (30) et le support (31) de bague de palier à une première extrémité en direction axiale et que le deuxième joint torique (8) est disposé entre la bague de palier (30) et le support (31) de bague de palier à une deuxième extrémité en direction axiale (X-X), sachant qu'un interstice (11) est prévu entre la bague de palier (30) et le support (31) de bague de palier, de sorte que des régions partielles des joints toriques (7, 8) remplissent l'interstice (11),
**caractérisé en ce que**
- l'élément élastique (5) est disposé, en direction axiale (X-X), entre le premier joint torique (7) et le deuxième joint torique (8).

2. Agitateur selon la revendication 1, **caractérisé en ce que** l'élément élastique (5) est un ruban de tôle ondulée ou un ruban d'acier à ressorts ou un ruban en élastomère.

3. Agitateur selon l'une des revendications précédentes, **caractérisé en ce que** l'élément élastique (5) est disposé centralement sur le support (31) de bague de palier dans la direction axiale (X-X) de l'ensemble palier,
ou **en ce que** le premier élément de palier (3) tourne et le deuxième élément de palier (4) est stationnaire.

4. Agitateur selon l'une des revendications précédentes, **caractérisé en ce que** le support (31) de bague de palier présente un évidement (33) destiné à recevoir l'élément élastique (5).

5. Agitateur selon l'une des revendications précédentes, **caractérisé par** une surface de contact axiale (35) entre la bague de palier (30) et le support (31) de bague de palier.

6. Agitateur selon l'une des revendications précédentes, **caractérisé en ce que** le support (31) de bague de palier entoure la bague de palier (30) sur le pourtour extérieur de la bague de palier (30).

7. Agitateur selon l'une des revendications précédentes, comprenant en outre au moins une pale agitatrice (9).

8. Agitateur selon la revendication 7, **caractérisé en ce que** la pale agitatrice est fixée sur le support (31) de bague de palier au moyen d'une liaison soudée.

9. Agitateur selon l'une des revendications précédentes, comprenant en outre un accouplement magnétique (106) avec un rotor intérieur (102), un rotor extérieur (103) et un pot d'entrefer (104) disposé entre le rotor intérieur (102) et le rotor extérieur (103), sachant que le rotor extérieur (103) est relié au support (31) de bague de palier de l'ensemble palier (1).

10. Agitateur selon la revendication 9, **caractérisé en ce qu'**un tourillon d'arbre (105), sur lequel est disposé le deuxième élément de palier (4) de l'ensemble palier (1), est disposé sur le pot d'entrefer (104).

11. Agitateur selon l'une des revendications précédentes, **caractérisé en ce qu'**un ajustement serré ou une liaison par serrage est prévu entre le tourillon d'arbre (105) et le deuxième élément de palier (4).

12. Agitateur selon l'une des revendications précédentes, **caractérisé en ce que** le support (31) de bague de palier est relié au rotor extérieur (103) au moyen d'une entretoise de liaison ou d'une bague de liaison ou d'une pale agitatrice (9).
